Europäisches Patentamt

(19) European Patent Office

Office européen des brevets

(11) Numéro de publication : **0 162 742**
**B1**

(12) **FASCICULE DE BREVET EUROPÉEN**

(45) Date de publication du fascicule du brevet :
29.07.87

(21) Numéro de dépôt : **85400745.7**

(22) Date de dépôt : **16.04.85**

(51) Int. Cl.⁴ : **B 65 B 51/14, B 65 B 31/02**

(54) **Dispositif pour le conditionnement et la conservation sous vide, en emballage plastique, de produits stérilisés dans un autoclave.**

(30) Priorité : **27.04.84 FR 8406672**

(43) Date de publication de la demande :
**27.11.85 Bulletin 85/48**

(45) Mention de la délivrance du brevet :
**29.07.87 Bulletin 87/31**

(84) Etats contractants désignés :
**BE CH DE GB IT LI LU NL SE**

(56) Documents cités :
**FR-A- 1 601 184**
**FR-A- 2 419 883**

(73) Titulaire : **M.A.J., Société à Responsabilité Limitée**
**9, rue du Général Compans**
**F-93507 Pantin (FR)**

(72) Inventeur : **Colas, Christian**
**18 rue Charles Laffitte**
**F-92200 Neuilly-sur-Seine (FR)**

(74) Mandataire : **Lefebure, Gérard et al**
**Office Blétry 2, boulevard de Strasbourg**
**F-75010 Paris (FR)**

Jouve, 18, rue St-Denis, 75001 Paris, France

## Description

La présente invention concerne un dispositif pour le conditionnement et la conservation sous vide, en emballage plastique, de produits stérilisés, notamment du linge, dans un autoclave, du type comprenant un casier-support, dont au moins une des faces verticales présente des fentes horizontales espacées verticalement, des moyens pour supporter des sacs, en matière plastique imperméable à l'air, en position horizontale à l'intérieur du casier-support, chaque sac ayant une extrémité ouverte qui passe à travers une des fentes horizontales du casier-support, et des moyens de compression et de scellement associés aux fentes pour sceller les extrémités ouvertes des sacs, chaque moyen de compression et de scellement comprenant une paire de barres horizontales parallèles, qui définissent entre elles l'une desdites fentes et dont l'une est mobile par rapport à l'autre qui est fixe et un moyen d'actionnement pour déplacer la barre mobile entre une première position dans laquelle les deux barres de chaque paire sont espacées l'une de l'autre, et une seconde position dans laquelle les deux barres de chaque paire sont pressées l'une contre l'autre.

Un dispositif de ce type est déjà connu par le brevet français n° 2 419 883 (US n° 4 242 852) de la demanderesse. Par rapport au dispositif décrit dans le brevet US 3 925 961 de la demanderesse, le dispositif décrit dans le brevet français 2 419 883 avait pour but :

1. d'augmenter la productivité du matériel en réduisant la durée d'attente entre deux cycles consécutifs de stérilisation dans l'autoclave ;

2. de fournir un système moins complexe et moins fragile du point de vue mécanique, compte tenu des rudes conditions qui règnent dans un autoclave ;

3. de permettre un chargement horizontal des sacs afin d'éviter que ceux-ci ne s'affaissent et ne se déforment dans l'autoclave sous l'effet de la chaleur et de leur propre poids.

Dans le brevet français n° 2 419 883, les moyens d'actionnement associés aux barres mobiles des moyens de compression et de scellement sont constitués par des joints gonflables. Les joints gonflables ont plusieurs avantages. Ils permettent d'obtenir une pression uniforme sur toute la longueur des barres des moyens de compression et de scellement, ce qui est l'une des conditions essentielles pour obtenir un scellement correct des sacs et pour garantir que les produits contenus dans ceux-ci resteront stériles jusqu'au moment de leur utilisation. En outre, les joints gonflables ont un faible encombrement en hauteur, ce qui permet de les disposer entre deux paires de barres de compression et de scellement. Il en résulte que, pour un casier ayant une hauteur donnée, il est possible de traiter simultanément un grand nombre des sacs disposés horizontalement et empilés les uns au-dessus des autres, contribuant ainsi à augmenter la productivité du dispositif de conditionnement et de stérilisation.

Toutefois, les joints gonflables capables de résister aux rudes conditions qui règnent dans un autoclave, ne permettent pas d'obtenir en même temps une course importante des barres mobiles des moyens de compression et de scellement et une pression de scellement importante, cette dernière étant aussi une condition essentielle pour obtenir un scellement correct. A titre indicatif, les joints gonflables utilisés dans le dispositif décrit dans le brevet français n° 2 419 883, ne permettaient qu'une faible course desdites barres mobiles, de l'ordre de 2 mm, de sorte que la fente formée entre chaque paire de barres n'a qu'une faible largeur. A l'usage, il s'est avéré que ceci présentait plusieurs inconvénients. En effet, avant la stérilisation, les sacs en matière plastique sont relativement mous, de sorte qu'il est difficile d'introduire leurs extrémités ouvertes dans des fentes de largeur aussi faible. En outre, la faible largeur des fentes gêne la pénétration de la vapeur dans les sacs et leur mise sous vide. Ceci conduit à une moins grande sécurité de stérilisation et impose par conséquent un temps de stérilisation plus élevé pour être sûr d'obtenir une bonne stérilisation. Il s'en suit que la durée totale du cycle de conditionnement et de stérilisation est plus longue, ce qui affecte défavorablement la productivité du dispositif de conditionnement et de stérilisation.

La présente invention a donc pour but de fournir, dans un dispositif de conditionnement et de stérilisation du type susindiqué, un moyen d'actionnement permettant d'obtenir une course de la barre mobile de chaque paire de barres plus importante qu'avec un joint gonflable, tout en fournissant une pression uniforme sur toute la longueur des barres, et pouvant être logé entre deux paires de barres sans augmenter sensiblement la distance verticale entre deux paires de barres et, par suite, sans réduire le nombre de sacs qu'il est possible de disposer horizontalement les uns au-dessus des autres dans un casier de hauteur donnée.

D'un autre côté, le brevet FR-A-1.601.184 décrit une machine à emballer des produits alimentaires sous atmosphère protectrice, comprenant un poste de scellement qui est notamment visible sur la figure 4 de ce brevet français. Ce poste de scellement comprend une partie supérieure fixe de scellement 74, qui est fixée rigidement à un élément de bâti 71, et une partie inférieure mobile de scellement 79, qui est fixée à un élément mobile de bâti 82 qui peut être déplacé verticalement vers et à l'écart de la partie supérieure fixe de scellement 74 par un double système d'actionnement. Plus précisément, ce double système d'actionnement comprend, d'une part, deux vérins 86 et 86', qui sont montés entre le bâti fixe 71 et l'élément de bâti mobile 82, et, d'autre part, un vérin 88 associé à un mécanisme 100-102 à cames. Les vérins 86 et 86' permettent de déplacer l'élément de bâti mobile 82 et, par suite, la partie inférieure mobile de scellement 79 sur une distance importante pour permettre le passage des emballages C entre les deux éléments de scellement 74 et 79 lorsque l'élément inférieur mobile de scellement 79 est écarté au maximum de l'élément fixe supérieur de scellement 74. Après que les deux éléments 74 et 79 ont été rapprochés l'un de l'autre au moyen des vérins 86 et 86', le vérin 88 et le mécanisme 100-102 y associé ont simplement pour but d'appliquer l'élément inférieur mobile de scellement 79 contre l'élément supérieur fixe de scellement 74 en fournissant la pression nécessaire pour le scellement. L'amplitude du déplacement de l'élément inférieur mobile de scellement 79 sous l'action du seul vérin 88 et du mécanisme 100-102 est extrêmement faible et serait bien insuffisante pour résoudre le problème qui est à la base de la présente invention. En outre, sur la figure 4 du brevet FR 1.601.184, il est visible que la hauteur totale du poste de scellement est environ égale à seize fois la hauteur (épaisseur) de l'emballage C. Il est tout à fait clair qu'un tel système ne pourrait pas être logé dans l'espace disponible entre deux paires successives de barres de compression et de scellement d'un casier-support du genre décrit dans la demande de brevet FR 2.419.883, où ledit espace disponible pour chaque moyen d'actionnement à une hauteur sensiblement égale à celle des sacs devant être scellés.

Pour résoudre le problème sus-indiqué, le dispositif de conditionnement et de conservation selon la présente invention est caractérisé par les éléments contenus dans la partie caractérisante de la revendication 1.

L'invention sera maintenant décrite en faisant référence aux dessins annexés sur lesquels :

La figure 1 est une vue en perspective d'un casier-support conforme à la présente invention.

La figure 2 est une vue en élévation latérale montrant, avec des arrachements, une partie de l'une des parois latérales verticales du casier-support de la figure 1.

Les figures 3, 4, 5 et 6 sont des vues en coupe respectivement suivant les lignes III-III, IV-IV, V-V et VI-VI de la figure 2.

La figure 7 est une vue semblable à la figure 2 montrant une variante de réalisation de la présente invention.

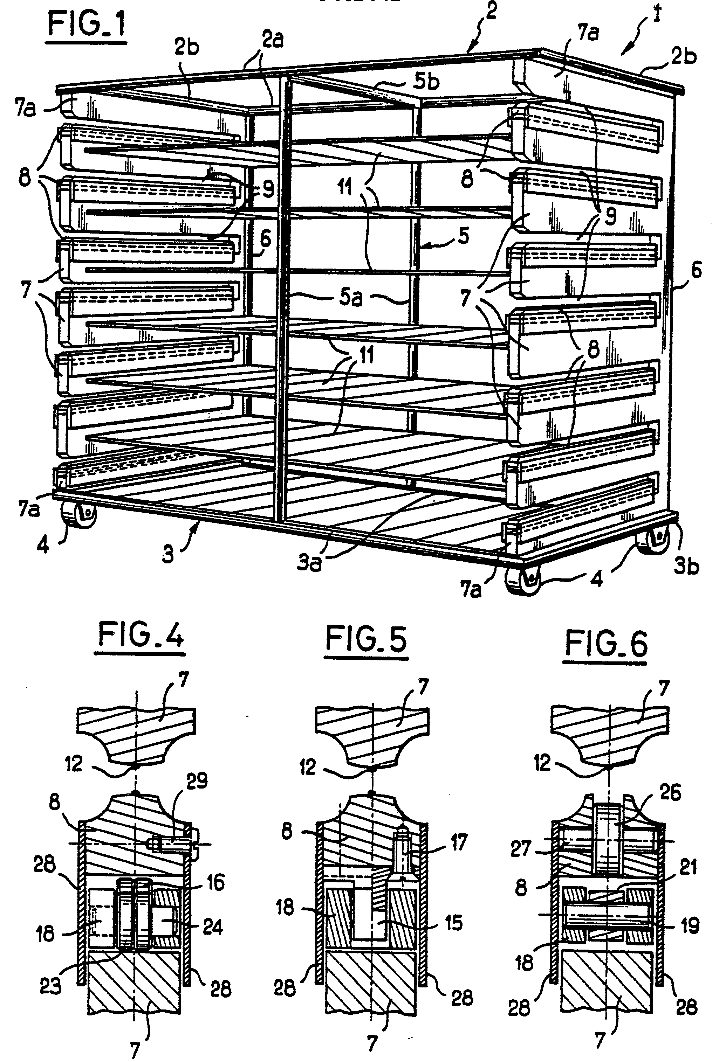

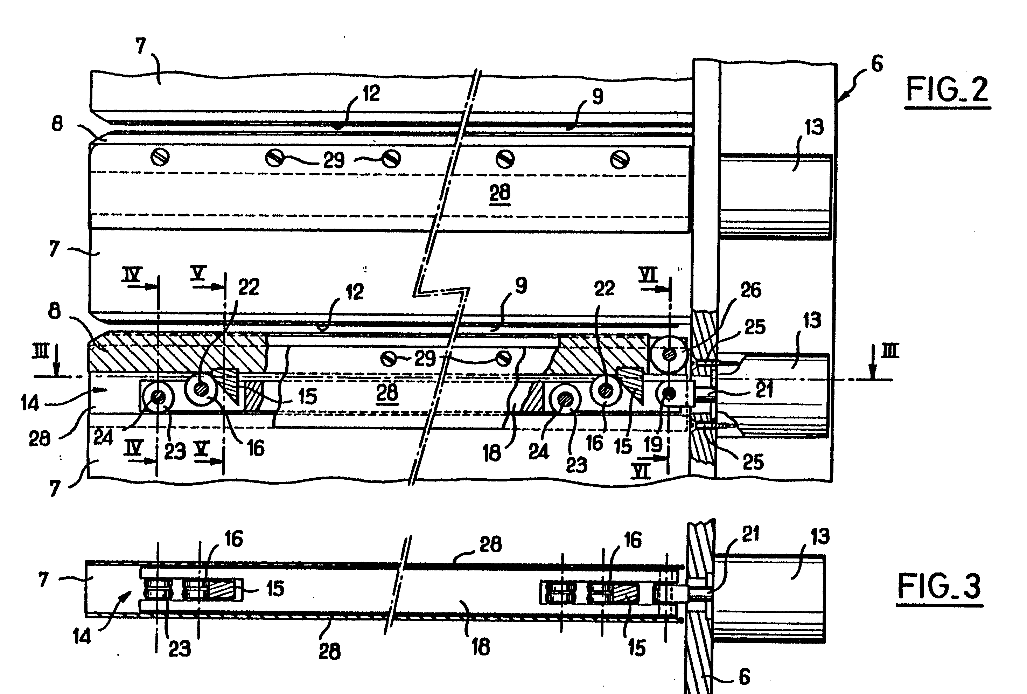

Le casier-support 1 représenté sur la figure 1 a en gros une forme parallèlépipédique. Il a une ossature comprenant un cadre rectangulaire horizontal supérieur 2, un cadre rectangulaire horizontal inférieur 3 pourvu de roulettes 4 pour faciliter l'introduction du casier-support 1 dans un autoclave (non montré), un cadre rectangulaire vertical 5 et deux montants verticaux d'angle 6. Chacun des deux cadres 2 et 3 comprend deux côtés longitudinaux 2a et 3a, respectivement et deux côtés transversaux 2b et 3b, respectivement. Le cadre 5 est composé de deux montants verticaux 5a et de deux traverses horizontales 5b qui entretoisent les côtés longitudinaux 2a et 3a des cadres 2 et 3 en leur milieu. Les côtés des cadres 2, 3 et 5 et les montants 6 peuvent être par exemple constitués par des profilés métalliques à section en L ou U.

A chacun des deux montants 6 sont fixées, par une de leurs extrémités, des barres parallèles horizontales 7, les barres extrêmes étant aussi fixées aux côtés 2b et 3b des cadres 2 et 3. A chaque barre 7 ou 7a est associée une barre horizontale 8, qui est parallèle à la barre 7 correspondante et qui définit avec elle une fente 9 ouverte à une extrémité, c'est-à-dire à l'extrémité opposée au montant 6.

A l'intérieur du casier-support 1 sont disposées des claies 11 qui sont supportées à leurs deux extrémités par les barres fixes 7 et, en leur milieu, par les montants 5a du cadre 5. Afin de donner une plus grande rigidité au casier-support 1, les claies 11 peuvent être fixées rigidement aux barres 7 et aux montants 5a. Les claies 11 sont prévues pour supporter, en position horizontale, des sacs (non montrés) en une matière plastique imperméable à l'air, contenant les produits, par exemple du linge, devant être stérilisés. Chaque sac a une extrémité ouverte qui peut être engagée dans l'une des fentes 9.

Pour permettre le scellement des sacs à la fin d'un cycle de stérilisation, chaque barre 8 peut être pressée contre la barre fixe 7 ou 7a y associée par un dispositif d'actionnement qui sera décrit plus loin. En outre, au moins l'une des deux barres 7 et 8 de chaque paire de barres associées, par exemple la barre 7, porte un organe de scellement 12 (figures 2 et 4 à 6) qui s'étend pratiquement sur toute la longueur de la barre 7 dans la fente 9. Chaque organe de scellement 12 peut être par exemple constitué par une résistance électrique chauffante montée de façon connue en soi dans un support isolant qui est fixé rigidement à la barre 7. Les résistances électriques chauffantes sont alimentées en courant de façon connue par des conducteurs reliés à un circuit d'alimentation (non montré) qui est commun à toutes les résistances électriques chauffantes et qui est porté par le casier-support 1. Ce circuit d'alimentation peut lui-même être raccordé, par un câble souple d'alimentation, à une prise de courant située à l'intérieur de l'autoclave après que le casier-support 1 a été introduit dans ledit autoclave.

Comme on l'a déjà indiqué plus haut, chaque barre 8 peut être déplacée et pressée contre la barre fixe 7 y associée par un dispositif d'actionnement qui sera maintenant décrit en faisant référence aux figures 2 à 6. Le dispositif d'actionnement comprend essentiellement un actionneur linéaire 13 dont le sens de mouvement est parallèle à la direction longitudinale de la fente 9, et un mécanisme de conversion 14 apte à convertir le sens de mouvement de l'actionneur linéaire 13 en un mouvement qui est perpendiculaire à la direction longitudinale de la fente 9. Afin d'obtenir une pression uniforme sur toute la longueur de la fente 9, le mécanisme de conversion 14 agit en deux points longitudinalement espacés de la barre 8. Comme cela est plus particulièrement visible dans les figures 2 et 3, le mécanisme de conversion 14 comprend deux cames 15, en forme de rampe, qui sont situées respectivement près des extrémités de la barre mobile 8, et deux galets 16 qui sont associés respectivement aux cames 15. Comme cela est plus particulièrement visible dans les figures 2 et 5, les cames 15 sont fixées par des vis 17 à la barre mobile 8, tandis que les galets 16 sont portés par une barre de commande 18 qui s'étend horizontalement entre la barre mobile 8 et la barre fixe 7 sous-jacente d'une autre paire de barres parallèles horizontales 7 et 8 et qui est accouplée par un axe 19 à l'organe de commande 21 de l'actionneur linéaire 13. Comme cela est plus particulièrement visible dans la figure 3, chacune des deux extrémités de la barre de commande 18 se présente sous la forme d'une fourche entre les deux branches de laquelle l'un des deux galets 16 est monté rotatif au moyen d'un axe 22. Deux autres galets 23 (figures 2 à 4) sont également montés rotatifs sur des axes 24 aux deux extrémités de la barre de commande 18, respectivement, et permettent à celle-ci de rouler sur la face supérieure de la barre fixe 7 sous-jacente.

Comme montré dans la figure 2, l'actionneur linéaire 13 est fixé au montant 6 par des vis 25. Bien que l'actionneur linéaire 13 pourrait être constitué par un vérin pneumatique ou hydraulique, il est de préférence constitué par un électroaimant. En effet, dans ce cas, on peut prévoir une seule source d'énergie pour faire fonctionner les résistances électriques chauffantes 12 et les actionneurs linéaires 13. Ceci représente une simplification appréciable sur le plan du matériel par rapport aux dispositifs décrits dans le brevet français n° 2 419 883 et dans le brevet américain n° 3 925 981, puisqu'il n'est plus nécessaire d'avoir une source de fluide sous pression. En outre, puisqu'il n'est plus nécessaire d'amener un fluide sous pression jusque dans la chambre de l'autoclave, on diminue les risques de défaut d'étanchéité. A cet égard, on rappellera que, au cours du cycle de stérilisation, la chambre de l'autoclave est mise sous vide et que toute solution de continuité dans les parois de la chambre de l'autoclave, notamment pour amener dans celle-ci une énergie quelconque hydraulique, pneumatique ou électrique, constitue une source possible de défaut d'étanchéité.

Lorsque l'électro-aimant 13 est excité, le noyau plongeur de l'électro-aimant, qui constitue l'organe de commande 21 de l'actionneur linéaire, exerce une traction sur la barre de commande 18. Il en résulte que les galets 16 exercent sur les rampes des deux cames 15 une poussée dirigée perpendiculairement à la surface des rampes. La composante horizontale de cette poussée a tendance à déplacer la barre mobile 8 vers le montant 6. Ceci est empêché par un galet 26 monté rotatif sur un axe 27 à l'extrémité de la barre 8 qui est adjacente au montant 6. La composante verticale de la poussée susmentionnée a pour effet de déplacer la barre 8 vers le haut et de la presser contre la barre fixe 7 sus-jacente.

Dans la forme d'exécution représentée sur la figure 2, les rampes des cames 15 sont inclinées à environ 45°. Il en résulte qu'à une course horizontale donnée du noyau plongeur 21 de l'électroaimant 13 correspond une course verticale de même longueur de la barre mobile 8.

Les rampes des cames 15 pourraient avoir bien entendu une pente différente de 45°. Avec une pente plus importante, on obtiendrait pour une course donnée du noyau plongeur 21 une course plus importante de la barre mobile 8, mais une force de pression plus faible contre la barre fixe 7 sus-jacente. Inversement, avec une pente plus faible, on obtiendrait, pour ladite course donnée du noyau plongeur 21, une course plus faible de la barre mobile 8, mais une force de pression plus importante contre la barre fixe 7 sus-jacente. La puissance électrique de l'électro-aimant 13, la longueur de la course de son noyau plongeur 21 et la pente des cames 15 sont choisies de manière à obtenir une course d'au moins 5 mm de la barre mobile 8 et une pression de cette dernière contre la barre fixe 7 sus-jacente suffisante pour le scellement des sacs en matière plastique.

Deux plaques 28 sont fixées respectivement de part et d'autre de chaque barre mobile 8 par des vis 29. Chaque paire de plaques 28 s'étend vers le bas à partir de la barre mobile 8 correspondante et chevauche partiellement la barre fixe 7 sous-jacente avec les côtés de laquelle les plaques 28 sont en contact glissant. Ainsi, les plaques 28 servent non seulement à protéger le mécanisme d'actionnement 14, mais aussi à guider les mouvements verticaux de la barre mobile 8.

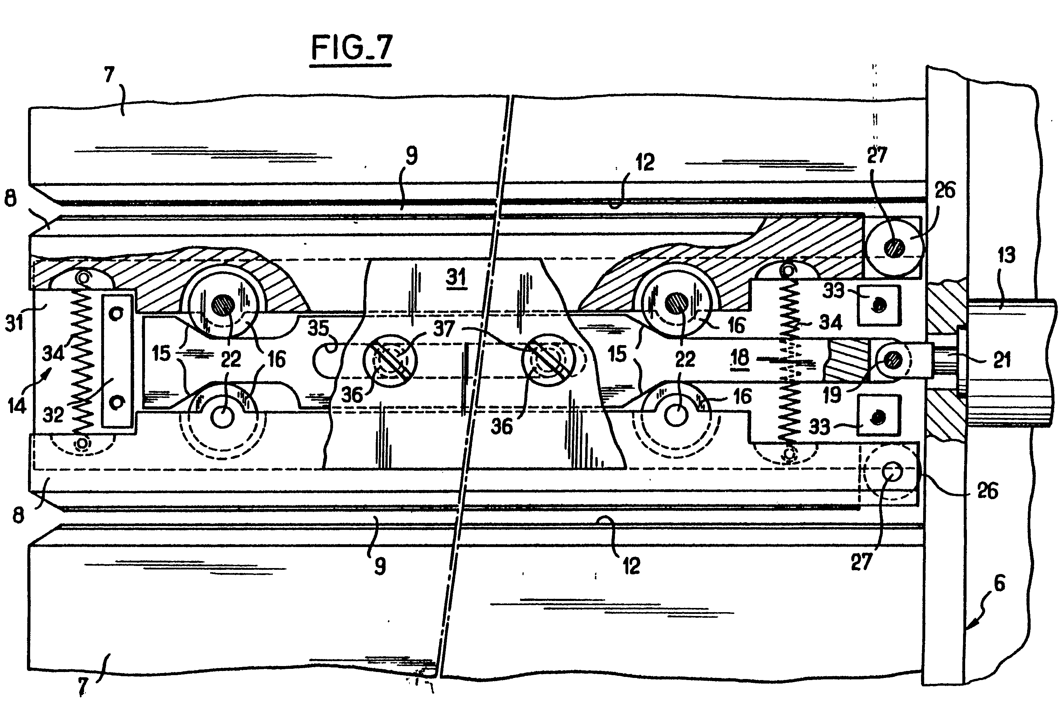

Dans la figure 7, on a représenté une autre forme d'exécution de la présente invention dans laquelle les éléments qui sont identiques ou qui jouent le même rôle que dans le mode de réalisation précédent sont désignés par les mêmes numéros de référence et ne seront pas décrits à nouveau en détail. La forme d'exécution représentée dans la figure 7 diffère de celle représentée dans les figures 2 à 6 en ce que chaque barre de commande 18 est disposée entre deux barres mobiles 8 appartenant respectivement à deux paires adjacentes de barres horizontales parallèles. Ainsi, chaque barre de commande 18 peut actionner simultanément deux barres mobiles 8. Chaque barre mobile 8 peut être associée à une barre fixe 7 pour former entre elles une fente 9 comme montré dans la figure 7, ou elle pourrait être associée à une autre barre mobile 8 pour former la fente 9.

Les deux barres mobiles 8 et la barre de commande 18 y associée sont montées entre deux plaques verticales parallèles 31, de forme rectangulaire allongée, qui sont fixées au moins à une extrémité au montant 6. Des entretoises 32 et 33 maintiennent entre les deux plaques 31 un espacement juste un peu plus grand que la largeur des barres mobiles 8. Deux ressorts 34 sont attachés aux deux barres mobiles 8 et sollicitent celles-ci l'une vers l'autre et vers la barre de commande 18. Cette dernière comporte au moins une fente longitudinale 35 qui coopère avec deux galets 36 montés rotatifs sur des axes 37 qui sont portés par les deux plaques 31, pour obliger la barre de commande 18 à se déplacer dans le sens horizontal quand l'actionneur linéaire 13 y associé est activé.

Une autre différence entre le mode de réalisation représenté sur la figure 7 et celui représenté sur les figures 2 à 6 réside en ce que les galets 16 sont portés par les barres mobiles 8, tandis que les cames en forme de rampe 15 sont portées ou font partie intégrante de la barre de commande 18.

Il va de soi que les formes d'exécution de la présente invention qui ont été décrites ci-dessus ont été données à titre d'exemple purement indicatif et nullement limitatif, et que de nombreuses modifications peuvent être facilement apportées par l'homme de l'art sans pour autant sortir du cadre de la présente invention. C'est ainsi notamment que, au lieu que chaque barre de commande 18 soit accouplée à un actionneur linéaire respectif 13, toutes les barres de commande 18 situées d'un même côté du casier-support 1 pourraient être accouplées à un seul et unique actionneur linéaire. En outre, au lieu de prévoir des claies fixes 11 pour supporter en position horizontale les sacs en matière plastique à l'intérieur du casier-support 1, on pourrait aussi prévoir un ou plusieurs casiers auxiliaires pouvant être insérés et extraits du casier-support 1 d'une manière analogue à ce qui est décrit dans le brevet français n° 2 419 883.

Les fentes 9 sont de préférence ouvertes à une extrémité et leur extrémité ouverte est de préférence évasée comme cela est clairement visible dans les figures 2 et 7. Toutefois, si on le désire, les fentes 9 pourraient être fermées à leurs deux extrémités.

**Revendications**

1. Dispositif pour le conditionnement et la conservation sous vide, en emballage plastique, de produits stérilisés, notamment du linge, dans un autoclave, comprenant un casier-support (1), dont au moins une des faces verticales présente des fentes horizontales (9) espacées verticalement, des moyens (11) pour supporter des sacs, en matière plastique imperméable à l'air, en position horizontale à l'intérieur du casier-support, chaque sac ayant une extrémité ouverte qui passe à travers une des fentes horizontales (9) du casier-support, et des moyens de compression et de scellement (7, 8, 12-14) associés aux fentes pour sceller les extrémités ouvertes des sacs, chaque moyen de compression et de scellement comprenant une paire de barres horizontales parallèles, (7, 8), qui définissent entre elles l'une desdites fentes (9) et dont l'une (8) est mobile par rapport à l'autre (7) qui est fixe, et un moyen d'actionnement (13, 14) pour déplacer la barre mobile (8) entre une première position dans laquelle les deux barres (7, 8) de chaque paire sont espacées l'une de l'autre, et une seconde position dans laquelle les deux barres de chaque paire sont pressées l'une contre l'autre, caractérisé en ce que le moyen d'actionnement (13, 14) comprend un actionneur linéaire (13) dont le sens de mouvement est parallèle à la direction longitudinale des fentes horizontales (9), et un mécanisme de conversion (14) apte à convertir le sens de mouvement de l'actionneur linéaire (13) en un mouvement orienté perpendiculairement à la direction longitudinale des fentes, et qui agit en deux points longitudinalement espacés de la barre mobile (8), l'arrangement étant tel que le déplacement de la barre mobile (8) entre la première et la seconde positions soit d'au moins 5 mm, le mécanisme de conversion (14) comprenant une paire de cames (15) en forme de rampe, qui sont situées respectivement près des extrémités de la barre mobile (8), et une paire de galets (16) associés respectivement auxdites cames, l'une desdites paires de cames et de galets étant portée par ladite barre mobile (8), l'autre paire étant portée par une barre horizontale de commande (18) accouplée à l'actionneur linéaire (13).

2. Dispositif selon la revendication 1, caractérisé en ce que la barre horizontale de commande (18) s'étend entre la barre mobile (8) de l'une des paires de barres horizontales parallèles et la barre fixe (7) d'une paire adjacente de barres horizontales parallèles, et en ce que l'une des deux barres, à savoir la barre de commande (18) et la barre fixe (7) de la paire adjacente de barres horizontales parallèles, comporte au moins deux galets (23) espacés longitudinalement, qui sont en contact avec une surface horizontale de roulement de l'autre des deux barres (7 et 18).

3. Dispositif selon la revendication 1, caractérisé en ce que la barre de commande (18) est disposée entre deux barres mobiles (8) appartenant respectivement à deux paires adjacentes de barres horizontales parallèles, la barre de commande (18) et les deux barres mobiles (8) y associées étant montées entre deux plaques verticales parallèles (31), de forme rectangulaire allongée, qui sont fixées au moins à une extrémité à un montant vertical (6) du casier-support (1), en ce que des ressorts (34) attachés aux deux barres mobiles (8) sollicitent celles-ci vers la barre de commande (18) située entre elles, et en ce que des moyens coopérants de guidage (35 et 36) sont prévus respectivement sur la barre de commande (18) et sur au moins une des deux plaques verticales parallèles (31) pour obliger la barre de commande (18) à se déplacer dans le sens horizontal quand l'actionneur linéaire (13) y associé est activé.

4. Dispositif selon l'une quelconque des revendications 1 à 3, caractérisé en ce que l'actionneur linéaire (13) est fixé à un montant vertical (6) du casier-support (1) près d'une extrémité de la barre mobile (8) et, lorsqu'il est activé, excerce sur la barre de commande (18) une force dirigée vers ledit montant vertical (8), et en ce que la barre mobile (8) comprend, à son extrémité adjacente audit montant (6), un galet (26) apte à rouler sur une surface verticale de roulement du montant (6).

5. Dispositif selon l'une quelconque des revendications 1 à 4, caractérisé en ce que l'actionneur linéaire (13) est un électro-aimant.

## Claims

1. A device for the vacuum packaging and storage, in plastic wrapping, of products sterilised in an autoclave, in particular linen, comprising a support rack (1), of which at least one of the vertical faces has horizontal slots (9) spaced vertically apart, means for supporting bags made of plastics material and airtight, in a horizontal position inside the support rack, each bag having an open end which passes through one of the horizontal slots (9) of the support rack, and compression and sealing means (7, 8, 12-14) associated with the slots for sealing the open ends of the bags, the compression and sealing means comprising a pair of parallel horizontal bars (7, 8), which between them define one of the said slots (9) and one (8) of which is movable relative to the other which is secured, and actuating means (13, 14) for displacing the moving bar (8) between a first position in which the two bars (7, 8) of each pair are spaced apart and a second position in which the two bars of each pair are pressed against one another, characterised in that the actuating means (13, 14) comprise a linear actuator (13) the direction of movement of which is parallel to the longitudinal direction of the horizontal slots (9), and a conversion mechanism (14) for converting the direction of movement of the linear actuator (13) into a movement guided perpendicularly in the longitudinal direction of the slots, and which acts at two spaced longitudinal points of the moving bar (8), the arrangement being such that the displacement of the moving bar (8) between the first and the second positions is at least 5 mm, the conversion mechanism (14) comprising a pair of cams (15) in the form of a ramp, which are located respectively close to the ends of the moving bar (8), and a pair of rollers (16) associated respectively with the said cams, one of the said pairs of cams and rollers being supported by the said moving bar (8), the other pair being supported by a horizontal control bar (18) coupled to the linear actuator (13).

2. A device according to claim 1, characterised in that the horizontal control bar (18) extends between the moving bar (8) of one of the pairs of horizontal parallel bars and the fixed bar (7) of an adjacent pair of parallel horizontal bars, and in that one of the two bars i. e. the control bar (18) and the fixed bar (7) of the adjacent pair of parallel horizontal bars, comprises at least two rollers (23) spaced longitidinally apart, which are in contact with a horizontal rolling surface of the other of the two bars (7 and 18).

3. A device according to claim 1, characterised in that the control bar (18) is disposed between two moving bars (8) belonging respectively to two adjacent pairs of parallel horizontal bars, the control bar (18) and the two moving bars (8) associated therewith being mounted between two parallel vertical plates (31), in an elongated rectangular shape, which are secured at least at one end to a vertical column (6) of the support rack (1), in that springs (34) attached to the two moving bars (8) attract these towards the control bar (18) located therebetween, and in that that cooperating guide means (35, 36) are provided respectively on the control bar (18) and on at least one of the two parallel vertical plates (31) to cause the control bar (18) to be displaced in the horizontal direction when the linear actuator (13) associated therewith is actuated.

4. A device according to any one of claims 1 to 3, characterised in that the linear actuator (13) is secured to a vertical column (6) of the support rack (1) close to one end of the moving bar (8) and, when it is actuated, exerts a force on the control bar (18) directed towards the said vertical column (6), and in that the moving bar (8) comprises, at its end ajacent the said column (6), a roller (26) for rolling on a vertical surface of the column (6).

5. A device according to any one of claims 1 to 4, characterised in that the linear actuator (13) is an electromagnet.

## Patentansprüche

1. Vorrichtung zum Konditionieren und Konservieren unter Vakuum von sterilisierten Gegenständen, insbesondere von Wäsche, in Kunststoffverpackungen in einem Autoklaven, die ein Regalgestell (1), von dem wenigstens eine der vertikalen Seiten in Vertikalrichtung in einem Abstand angeordnete horizontale Schlitze (9) aufweist, die Mittel (11) zum Tragen der Säcke aus luftundurchlässigem Kunststoffmaterial im Innern des Regalgestells, wobei jeder Sack ein offenes Ende aufweist, das sich durch einen der horizontalen Schlitze (9) des Regalgestells hindurch erstreckt, und die Druckund Verschließmittel (7, 8, 12 bis 14), die den Schlitzen zugeordnet sind, um die offenen Enden der Säcke zu verschließen, wobei jedes Druck- und Verschließmittel ein Paar von horizontalen parallelen Stäben (7, 8) aufweist, die zwischen sich einen der genannten Schlitze (9) bilden und von denen einer (8) in bezug auf den anderen festen (7) beweglich ist, und die ein Betätigungsmittel (13, 14) zum Verschieben des beweglichen Stabs (8) zwischen einer ersten Stellung, in der die beiden Stäbe (7, 8) jeden Paars einen Abstand voneinander haben, und einer zweiten Stellung, in der die beiden Stäbe jeden Paars gegeneinander gedrückt sind, aufweist, dadurch gekennzeichnet, daß das Betätigungsmittel (13, 14) ein lineares Betätigungselement (13), dessen Bewegungsrichtung parallel ist zur Längsrichtung der horizontalen Schlitze (9), und einen Umwandlungsmechanismus (14) zum Umwandeln der Bewegungsrichtung des linearen Betätigungselements (13) in eine Bewegung aufweist, die zur Längsrichtung der Schlitze senkrecht orientiert ist, und die an zwei in Längsrichtung einen Abstand aufweisenden Punkten des beweglichen Stabs (8) wirkt, wobei die Anordnung so getroffen ist, daß die Verschiebung des beweglichen Stabs (8) zwischen den ersten und zweiten Stellungen wenigstens 5 mm beträgt, wobei der Umwandlungsmechanismus ein Paar von rampenförmigen Nocken (15), die nahe den Enden des beweglichen Stabs (8) angeordnet sind, und ein Paar von Rollen (16) aufweist, die den genannten Nocken zugeordnet sind, wobei das eine der genannten Paare von Nocken und Rollen durch den genannten beweglichen Stab (8) und das andere Paar durch eine horizontale Steuerstange (18) getragen ist, die mit dem linearen Betätigungselement verbunden ist.

2. Vorrichtung nach Anspruch 1, dadurch gekennzeichnet, daß die horizontale Steuerstange (18) sich zwischen dem beweglichen Stab (8) des einen Paares von horizontalen parallelen Stäben und dem festen Stab (7) eines benachbarten Paars von horizontalen parallelen Stäben erstreckt, und daß entweder die Steuerstange (18) oder aber der feststehende Stab (7) des benachbarten Paars der horizontalen parallelen Stäbe wenigstens zwei in Längsrichtung einen Abstand aufweisende Rollen trägt, die mit einer horizontalen Rollfläche des anderen der beiden Bauteile, die aus feststehendem Stab und Steuerstange (7 und 18) bestehen, in Berührung sind.

3. Vorrichtung nach Anspruch 1, dadurch gekennzeichnet, daß die Steuerstange (18) zwischen zwei beweglichen Stäben (8) angeordnet ist, die zu zwei benachbarten Paaren von horizontalen parallelen Stäben gehören, wobei die Steuerstange (18) und die beiden beweglichen Stäbe (8), die dazugehören, zwischen zwei vertikalen parallelen Platten (31) angeordnet sind, die längliche rechteckige Form haben, die wenigstens an einem Ende an einer Vertikalstrebe (6) des Regalgestells (1) befestigt sind, daß Federn (34), die an den beiden beweglichen Stäben (8) befestigt sind, dieselben in Richtung zur zwischen ihnen angeordneten Steuerstange (18) spannen, und daß zusammenwirkende Führungsmittel (35 und 36) auf der Steuerstange (18) und wenigstens einer der beiden vertikalen parallelen Platten (31) vorgesehen sind, um die Steuerstange (18) zu einer Verschiebung in Horizontalrichtung zu zwingen, wenn das zugehörige lineare Betätigungselement (13) erregt wird.

4. Vorrichtung nach einem der Ansprüche 1 bis 3, dadurch gekennzeichnet, daß das lineare Betätigungselement (13) an einer vertikalen Strebe (6) des Regalgestells (1) nahe einem Ende des beweglichen Stabs (8) befestigt ist und, wenn es erregt ist, auf die Steuerstange (18) eine Kraft ausübt, die zu der genannten Vertikalstrebe (6) gerichtet ist, und daß der bevegliche Stab (8) an seinem Ende, das der Strebe (6) benachbart ist, eine Rolle (26) aufweist, die auf einer vertikalen Rolloberfläche der Strebe (6) rollen kann.

5. Vorrichtung nach einem der Ansprüche 1 bis 4, dadurch gekennzeichnet, daß das lineare Betätigungselement (13) ein Elektromagnet ist.

FIG_1

FIG_4     FIG_5     FIG_6

FIG_2

FIG_3

FIG.7

0 162 742